# EUROPEAN PATENT SPECIFICATION

(11) **EP 4 195 744 B1**
(45) Date of publication and mention of the grant of the patent: **08.04.2026**
(21) Application number: 21852251.4
(22) Date of filing: 06.08.2021
(51) Int. Cl.: H04W 24/08, H04W 24/10, H04W 24/02, H04W 76/27

(54) **MEASUREMENT METHOD AND DEVICE, COMMUNICATION NODE, AND STORAGE MEDIUM**
MESSVERFAHREN UND -VORRICHTUNG, KOMMUNIKATIONSKNOTEN UND SPEICHERMEDIUM
PROCÉDÉ ET DISPOSITIF DE MESURE, NOEUD DE COMMUNICATION ET SUPPORT DE STOCKAGE

(30) Priority: 06.08.2020 CN 202010785583
(43) Date of publication of application: 14.06.2023
(73) Proprietor: ZTE Corporation, Shenzhen, Guangdong 518057 (CN)
(72) Inventor: CHEN, Jiajun, Shenzhen, Guangdong 518057 (CN); GAO, Yin, Shenzhen, Guangdong 518057 (CN); LIU, Zhuang, Shenzhen, Guangdong 518057 (CN); LI, Dapeng, Shenzhen, Guangdong 518057 (CN)
(74) Representative: Vossius & Partner Patentanwälte Rechtsanwälte mbB
(86) International application number: PCT/CN2021/111097
(87) International publication number: WO 2022/028560

(56) References cited:
- CN-A- 102 149 106
- CN-A- 102 938 905
- CN-A- 111 278 043
- CN-A- 111 935 740
- US-A1- 2012 322 386
- NOKIA ET AL: "Miscellaneous corrections", vol. RAN WG2, no. Online Meeting ;20200420 - 20200430, 9 April 2020 (2020-04-09), XP051871207, Retrieved from the Internet <URL:https://ftp.3gpp.org/tsg_ran/WG2_RL2/TSGR2_109bis-e/Docs/R2-2003159.zip R2-2003159 Miscellaneous corrections (37.320).docx> [retrieved on 20200409]
- CMCC: "Discusson on MDT procedures for INACTIVE UEs", 3GPP DRAFT; R2-1901950, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 15 February 2019 (2019-02-15), pages 1 - 3, XP051603298
- ERICSSON: "Leftover issues for Logged MDT in NR", vol. RAN WG2, no. Chongqing, China; 20191014 - 20191018, 3 October 2019 (2019-10-03), XP051804016, Retrieved from the Internet <URL:https://ftp.3gpp.org/tsg_ran/WG2_RL2/TSGR2_107bis/Docs/R2-1912827.zip R2-1912827.docx> [retrieved on 20191003]

## Description

The present application claims priority to Chinese patent application with application number 202010785583.9 filed to the China National Intellectual Property Administration on August 6, 2020.

### FIELD

The present application relates to the field of communication techniques, for example, to a measurement method and apparatus, a communication node, and a storage medium.

### BACKGROUND

Minimization of Drive Tests (MDT) technology is to report information related to network optimization required by a network side by a User Equipment (UE), thereby reducing traditional drive tests

MDT in related art only performs a measurement when a UE is in an idle state, and reports a measurement amount in the idle state after the UE enters into a connection state, and does not support a continuous measurement of the UE. As a result, subsequent function processing is not convenient to be performed at a network side, for example, position prediction is not convenient to be performed at a network side.
R2-2003159 Miscellaneous corrections (37.320) relates to network operation and overall control of MDT. R2-1901950 Discusson on MDT procedures for INACTIVE UEs relates to configuration for MDT in RRC inactive state. R2-1912827 event-based logged measurement for MDT in NR

### SUMMARY

The present application provides a measurement method and apparatus, and a storage medium, effectively achieving a continuous MDT measurement. The invention is specified by the independent claims. Preferred embodiments are defined in the dependent claims. In the following description, although numerous features may be designated as optional, it is nevertheless acknowledged that all features comprised in the independent claims are not to be read as optional. Any embodiment, aspect, example or implementation not being part of the claims, is only presented as information.

In a first aspect, embodiments of the present application provide a measurement method applied to a first communication node, and the method includes: obtaining minimization of drive tests MDT measurement configuration information, where the MDT measurement configuration information indicates the first communication node to perform a continuous MDT measurement during continuous multiple states among an idle state, an inactive state, and a connected state; and generating a measurement report according to the MDT measurement configuration information and transmitting the measurement report.

In a second aspect, embodiments of the present application provide a measurement method, applied to a second communication node, and the method includes: transmitting minimized drive test MDT measurement configuration information, where the MDT measurement configuration information indicates a first communication node to perform a continuous MDT measurement during continuous multiple states among an idle state, an inactive state, and a connected state; and obtaining a measurement report transmitted by the first communication node, wherein the measurement report is used to perform network optimization.

In a third aspect, embodiments of the present application provides a measurement apparatus, configured on a first communication node, and the method includes: an obtaining module, configured to obtain minimization of drive tests MDT measurement configuration information, where the MDT measurement configuration information indicates the first communication node to perform a continuous MDT measurement during continuous multiple states among an idle state, an inactive state, and a connected state; and a generating module configured to generate a measurement report according to the MDT measurement configuration information and transmitting the measurement report.

In a fourth aspect, embodiments of the present application provide a measurement appartus, configured on a second communication node, and the apparatus includes: a transmission module, configured to transmit minimization of drive tests MDT measurement configuration information, where the MDT measurement configuration information indicates a first communication node to perform a continuous MDT measurement during continuous multiple states among an idle state, an inactive state, and a connected state; and an obtaining module, configured to obtain a measurement report transmitted on the first communication node, where the measurement report is used for network optimization.

In a fifth aspect, an embodiment of the present application provides a storage medium storing a computer program, when executed by a processor, the computer program implements any method of embodiments of the present application.

### BRIEF DESCRIPTION OF THE DRAWINGS

FIG.1 is a schematic flowchart of a measurement method according to an embodiment of the present application;
FIG.2 is a schematic flowchart of a measurement method according to an embodiment of the present application;
FIG. 2A is a schematic flowchart of determining predicted position information according to an embodiment of the present application;
FIG. 2B is a schematic flowchart of another determination of predicted position information according to an embodiment of the present application;
FIG.3 is a structural diagram of a measurement apparatus according to an embodiment of the present application;
FIG. 4 is a structural diagram of a measurement apparatus according to an embodiment of the present application;
FIG. 5 is a structural diagram of a first communication node according to an embodiment of the present application; and
FIG. 6 is a structural diagram of a second communication node according to an embodiment of the present application.

### DETAILED DESCRIPTION OF EMBODIMENTS

Hereinafter, embodiments of the present application will be described in detail with reference to drawings. It should be noted that embodiments in the present application and features of the embodiments may be arbitrarily combined with each other if there is no conflict.

Steps shown in flowcharts of drawings may be performed in a computer system, such as a set of computer-executable instructions. In addition, although a logical order is shown in the flowcharts, in some cases the steps shown or described may be performed in an order different from that herein.

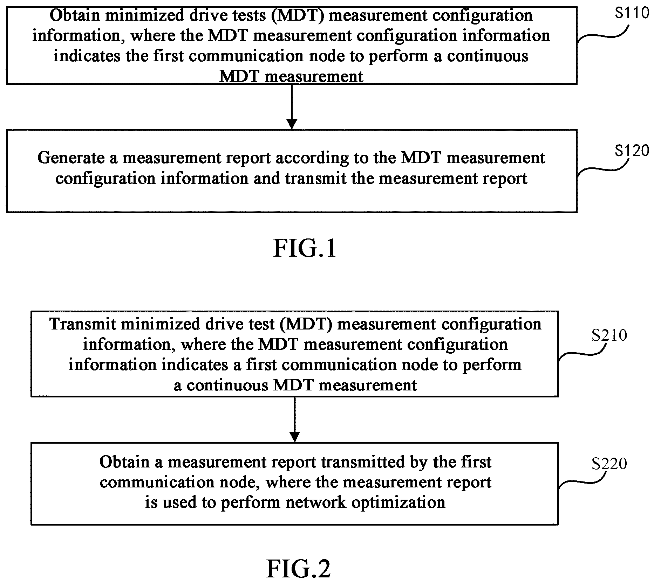

In an exemplary embodiment, FIG. 1 is a schematic flowchart of a measurement method according to an embodiment of the present application, and the method may be applicable to a continuous MDT measurement. The method may be performed by a measurement apparatus provided by the present application, and the measurement apparatus may be implemented by software and/or hardware, and is typically integrated on a first communication node. The first communication node may be a UE.

As shown in FIG.1, a measurement method provided by the present application includes the following:
S110, minimization of drive tests MDT measurement configuration information is obtained. The MDT measurement configuration information indicates the first communication node to perform a continuous MDT measurement.

The MDT measurement configuration information may be information indicating the first communication node to perform the continuous MDT measurement. The MDT measurement configuration information may indicate the first communication node to perform the continuous MDT measurement in an idle state, an inactive state, or a connected state.

The MDT measurement configuration information may be transmitted from a second communication node to the first communication node to indicate the first communication node to perform the continuous MDT measurement. A content included in the MDT measurement configuration information is not limited, as long as the first communication node can be indicated to perform the continuous MDT measurement. Exemplarily, MDT measurement configuration information may include indication information or MDT measurement activation information to indicate in which state a first communication node performs a MDT continuous measurement. MDT measurement configuration information may further include MDT position prediction measurement configuration information, and the MDT position prediction measurement configuration information may indicate a content of a required measurement.

S120, a measurement report is generated according to the MDT measurement configuration information and the measurement report is transmitted.

The measurement report may be a report formed based on data collected after the continuous MDT measurement. After obtaining the MDT measurement configuration information, a MDT measurement collection may be performed according to the MDT measurement configuration information, and the collected data may be stored. The collected data can be used to form the measurement report. A content included in the measurement report may be determined based on a content included in the MDT position prediction measurement configuration information.

Timing of generating the measurement report and transmitting the measurement report is not limited here, the measurement report can be generated and transmitted when the second communication node requests the first communication node to transmit the measurement report. The measurement report can also be generated in advance, and transmitted to the second communication node when the second communication node requests the first communication node to transmit the measurement report. The measurement report can be generated at a setting timing and directly transmitted to the second communication node. The setting timing is not limited and can be determined according to an actual situation.

The measurement method provided by the example can perform the continuous MDT measurement based on the MDT measurement configuration information, so as to generate and transmit the measurement report to facilitate network optimization.

On the basis of the above-mentioned embodiment, a modified embodiment of the above-mentioned embodiment is proposed. It should be noted here that, only difference from the above-mentioned embodiment is described in the modified embodiment for simplification.

In one embodiment, the MDT measurement configuration information is one of a radio resource control (RRC) message and record MDT measurement activation information. The RRC message is an RRC setup request message or an RRC reconfiguration message or a position prediction request message.

The position prediction request information may be information for indicating the first communication node to perform the continuous MDT measurement.

In one embodiment, the measurement report includes a measurement amount of one or more of the following states: an idle state; an inactive state; and a connected state.

The content included in the measurement report may be determined based on the content indicated by the MDT measurement configuration information. Exemplarily, when MDT measurement configuration information indicates that a first communication node performs a continuous MDT measurement in an idle state, a measurement report may include a measurement amount in an idle state. When MDT measurement configuration information indicates that a first communication node performs a continuous MDT measurement in an inactive state, a measurement report may include a measurement amount in an inactive state. When MDT measurement configuration information indicates that a first communication node performs a continuous MDT measurement in a connected state, a measurement report may include a measurement amount in a connected state.

In one embodiment, the measurement report includes continuous historical position measurement information of the first communication node in a continuous state, and the continuous historical position measurement information includes one or more of the following: a longitude and latitude coordinate of one or more time points; a connection cell identification of one or more time points; a movement direction angle of the first communication node of one or more time points; and movement speed of the first communication node of one or more time points.

The continuous state may include one or more of the following: the idle state; the inactive state; and the connected state. The continuous historical position measurement information is information obtained when the first communication node performs the continuous MDT measurement, and the information can be used for position prediction.

The movement direction angle can be understood as an angle characterizing a movement direction.

In one embodiment, the MDT measurement configuration information includes one or more of the following: MDT measurement activation information; MDT continuous measurement reporting indication information; indication information of whether to record a MDT measurement in a connected state; indication information of whether to record a MDT measurement connected in an inactive state; indication information of whether to record a MDT measurement in an idle state residency; and MDT position prediction measurement configuration information.

The MDT measurement activation information may indicate in which state the first communication node performs the MDT measurement. The MDT continuous measurement reporting indication information may be indication information indicating the first communication node to perform continuous measurement reporting. The MDT position prediction measurement configuration information may a content indicating that the first communication node needs to measure when the MDT continuous measurement is performed.

The MDT continuous measurement reporting indication information may be considered as indication information for indicating whether to perform the MDT continuous measurement reporting indication. The indication information of whether to record the MDT measurement in the connected state may indicate whether to record the MDT measurement in the connected state. The indication information of whether to record the MDT measurement in the inactive connection may indicate whether to record the MDT measurement in the inactive connection. The indication information of whether to record the MDT measurement in the idle state residency may indicate whether to record the MDT measurement in the idle state residency.

In one embodiment, when the MDT measurement configuration information includes the MDT position prediction measurement configuration information, the MDT measurement activation information indicates the following contents: the MDT continuous measurement reporting indication is set to be positive, whether to record a MDT measurement in a connected state is set to be positive; whether to record a MDT measurement connected in an inactive state is set to be positive; and whether to record a MDT measurement in an idle state residency is set to be positive.

When the MDT measurement configuration information includes the MDT position prediction configuration information, the first communication node performs the continuous MDT measurement in the connected state, the idle state and the inactive state is realized through that the MDT continuous measurement reporting indication is set to be positive, whether to record a MDT measurement in a connected state is set to be positive, whether to record a MDT measurement connected in an inactive state is set to be positive, and whether to record a MDT measurement in an idle state residency is set to be positive.

In one embodiment, the MDT position prediction measurement configuration information includes one or more of the following: a position measurement period; an effective time of position prediction measurement configuration; indication information of whether to perform a measurement on a longitude and latitude coordinate; indication information of whether to perform a measurement on altitude; indication information of whether to perform a measure and a record on a connection cell identification; indication information of whether to perform a measurement on speed; and indication information of whether to perform measurement on a movement direction angle of the first communication node.

The position measurement period can be considered as a period of a measurement on a position. The effective time of position prediction measurement configuration can be understood as an effective time of position prediction measurement configuration.

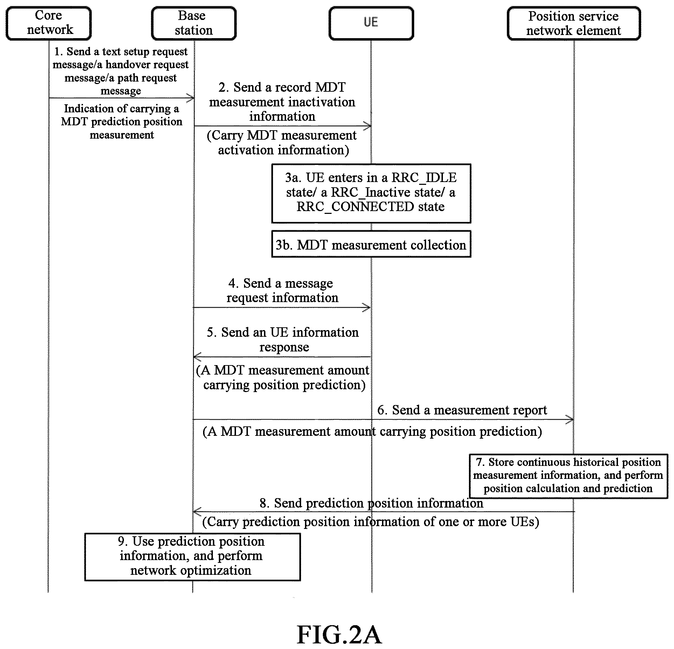

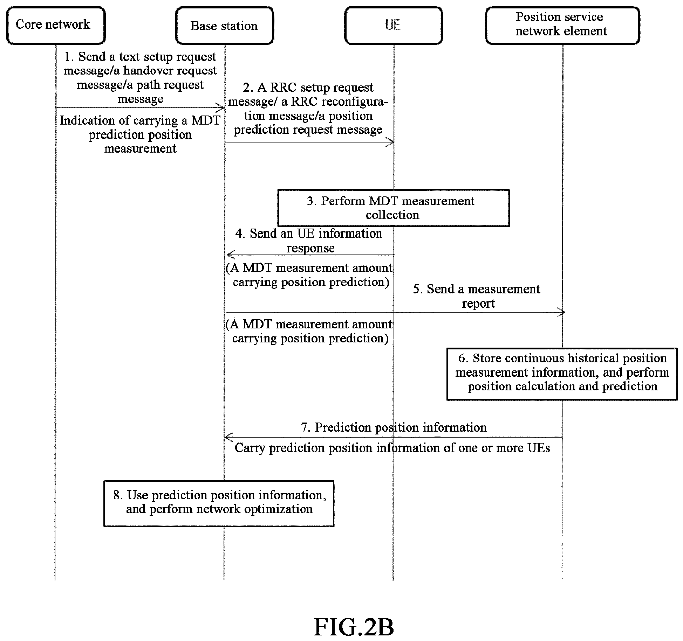

In an exemplary embodiment, the present application also provides a measurement method. FIG.2 is a schematic flowchart of a measurement method according to an embodiment of the present application. The method may be applicable to a continuous MDT measurement, and the method can be performed by a measurement apparatus provided by the present application, and is integrated on the second communication node. The second communication node includes but is not limited to: a base station.

As shown in FIG.2, the measurement method provided by the present application includes the following:

S210, MDT measurement configuration information is transmitted. The MDT measurement configuration information indicates the first communication node to perform the continuous MDT measurement.

The second communication node may firstly determine the MDT measurement configuration information and then transmit the MDT measurement configuration information. The content included in the MDT measurement configuration information is not limited, and can be determined based on a content and a status of the required measurement. The MDT measurement configuration information may indicate the first communication node to perform the continuous MDT measurement, so as to obtain the measurement report transmitted by the first communication node for network optimization.

S220, the measurement report transmitted by the first communication node is obtained. The measurement report is used to perform network optimization.

After the MDT measurement configuration information is transmitted to the first communication node, obtain the measurement report transmitted by the first communication node may be obtained, so as to perform network optimization based on the measurement report. It is not limited here how to perform network optimization based on the measurement report.

Reference may be made to the above-mentioned embodiments for a content not yet exhaustive in this example, which will not be repeated here.

The measurement method provided in this example can control the first communication node to perform the continuous MDT measurement by sending the MDT measurement configuration information to the first communication node, thereby obtaining the measurement report fed back by the first communication node and realizing network optimization.

On the basis of the above-mentioned embodiment, a modified embodiment of the above-mentioned embodiment is proposed. It should be noted here that, only difference from the above-mentioned embodiment is described in the modified embodiment for simplification.

In one embodiment, the MDT measurement configuration information is one of the RRC message and the record MDT measurement activation information. The RRC message is an RRC setup request message or an RRC reconfiguration message or a position prediction request message. The MDT measurement configuration information is transmitted after indication information of MDT prediction position measurement is obtained.

In one embodiment, the measurement report includes a measurement amount of one or more of the following states: an idle state; an inactive state; and a connected state.

In one embodiment, the measurement report includes continuous historical position measurement information of the first communication node in a continuous state, and the continuous historical position measurement information includes one or more of the following: the longitude and latitude coordinate of one or more time points; the connection cell identification of one or more time points; the movement direction angle of the first communication node of one or more time points; and the movement speed of the first communication node of one or more time points.

In one embodiment, the MDT measurement configuration information includes one or more of the following: the MDT measurement activation information; the MDT continuous measurement reporting indication information; the indication information of whether to record the MDT measurement in the connected state; the indication information of whether to record the MDT measurement connected in the inactive state; the indication information of whether to record the MDT measurement in the idle state residency; and the MDT position prediction measurement configuration information.

In one embodiment, when the MDT measurement configuration information includes the MDT position prediction measurement configuration information, the MDT measurement activation information indicates the following contents: the MDT continuous measurement reporting indication is set to be positive, whether to record the MDT measurement in the connected state is set to be positive; whether to record the MDT measurement connected in the inactive state is set to be positive; and whether to record the MDT measurement in an idle state residency is set to be positive.

In one embodiment, the MDT position prediction measurement configuration information includes one or more of the following: the position measurement period; the effective time of position prediction measurement configuration; the indication information of whether to perform a longitude and latitude coordinate measurement; the indication information of whether to perform a height measurement; the indication information of whether to perform a measure and a record on a connection cell identification; indication information of whether to perform speed measurement; and the indication information of whether to perform a measurement on a movement direction angle of the first communication node.

In one embodiment, the method further includes: transmitting the measurement report; and obtaining predicted position information. The predicted position information is information generated based on the measurement report, and the predicted position information is used for network optimization. After obtaining the measurement report, the second communication node may send the measurement report to a device that determines prediction position information, such as a core network or a position service network element, for the device to determine prediction position information to determine prediction position information. The prediction position information can be understood as predicted position information, and the information can be generated based on the measurement report, and the specific generating means is not limited here. After obtaining the prediction position information, the second communication node may use the predicted position information to perform network optimization.

The present application is exemplarily described below. The measurement method provided by the present application can be regarded as a continuous measurement method, and related MDT technology does not support a continuous measurement of a UE in an idle state, an inactive (i.e., INACTIVE) state and a connected state, and recording MDT in the related art, that is, Logged MDT measurement is only performed in an idle state, and a measurement amount in an idle state is reported after entering a connected state. However, some functions on wireless network side only rely on a measurement amount in an idle state, which is not enough. For example, position prediction function on a network side needs to collect historical position measurement data and measurement data related to historical positions. Artificial intelligence (AI) function entity on a network side needs to continuous historical data of a UE user trajectories for training and prediction, which means that a UE needs to measure position-related measurements in an idle state, an INACTIVE state and a connected state, and then notify a network end. Therefore, it is necessary to solve how to perform a MDT continuous measurement and collection in various states of a UE.

A radio access network (RAN) only supports positioning of a current terminal position, and cannot predict a possible position of a terminal at a next time point according to relevant historical training data. Prediction a position of a terminal has great reference significance for improving handover success rate between base stations and performing load balancing. However, a current UE only performs position measurement in an idle state, so a network side cannot obtain continuous historical position data of UE user trajectory through a measurement report of a UE, and thus cannot make prediction. Therefore, it is necessary to solve how to perform a continuous measure on a position and a position-related measurement in various states of a UE.

MDT is an automated drive test to collect and report measurement data for ordinary users/commercial terminals through network configuration, introduced by the 3rd Generation Partnership Project (3GPP) in a Long Term Evolution (LTE) system. The present application provides a new method, which enables a UE to continuously perform MDT measurements and collections in an idle state, an INACTIVE state and a connected state, and uses collected continuous historical measurement data of UE user trajectory for training and predicting and introducing UE speed and a movement direction angle to improve the accuracy of UE position prediction. In the present application, UE can continuously report a measurement amount, that is, a measurement report, so as to improve the accuracy of UE position prediction.

FIG. 2A is a schematic flowchart of determining predicted position information according to an embodiment of the present application. Referring to FIG. 2A, this example shows position prediction based on a record MDT continuous measurement. When determining prediction position information, the following are included:
1. A base station receives UE-related messages sent by a core network, such as a UE text setup request (i.e., initial context setup request) message or a handover request message (i.e., handover request), or a path request message (i.e., Trace start), which carries indication activating the UE MDT prediction position measurement.
2. The base station sends record MDT measurement activation information to the UE through an air interface. The MDT measurement activation information is carried, and the record MDT measurement activation information carries one or more of the following: MDT continuous measurement reporting indication information; indication information of whether to record a MDT measurement in a connected state (RRC_CONNECTED); indication information of whether to record a MDT measurement connected in an INACTIVE state; indication information of whether to record a MDT measurement in idle state residency(RRC_IDLE); and MDT position prediction measurement configuration information, and the MDT position prediction measurement configuration information is used to indicate the UE to perform related measurements.

The MDT position prediction measurement configuration information carries one or more of the following: a position measurement period; an effective time of position prediction measurement configuration; indication information of whether to perform a measurement on a longitude and latitude coordinate; indication information of whether to perform a measurement on altitude; indication information of whether to perform a measure and a record on a connection cell identification; indication information of whether to perform a measurement on speed; and indication information of whether to perform a measurement amount of a direction angle of the UE.

When the MDT position prediction measurement configuration information is configured, MDT measurement activation information indicates the following contents: the MDT continuous measurement reporting indication is set to be positive, whether to record a MDT measurement in a connected state is set to be positive; whether to record a MDT measurement connected in an inactive state is set to be positive; and whether to record a MDT measurement in an idle state residency is set to be positive.

3. The UE receives the MDT measurement activation information, and according to contents therein, measurements on corresponding contents are performed in an idle state (IDLE), an INACTIVE state, or a connected state (CONNECTED), respectively.

4. The base station sends an information request (i.e., UE Information Request) to the UE through the air interface, indicating a MDT measurement that the UE needs to report.

5. The UE sends a UE information response (i.e., UE Information Response) to the base station, which contains one or more of the following continuous historical position measurement information in a continuous state of the UE: a longitude and latitude coordinate of one or more time points; a connection cell identification of one or more time points; a movement direction angle of the first communication node of one or more time points; and movement speed of the first communication node of one or more time points.

6. The base station sends the received UE measurement report to a position service network element.

7. The position service network element calculates a current position of the UE and a predicted position or predicted cell at a certain future time point or a future time period according to continuous historical position measurement information of the UE in a continuous state.

8. The position service network element sends the prediction position information to the base station, where the prediction position information includes a predicted position of one or more UEs at a certain future time point or a future time period, which can be one or more of the following: a predicted latitude and longitude coordinate; a predicted cell identification; predicted altitude information; predicted connection beam identification information with a certain cell; and predicted tracking area information (TA).

9. The base station receives the predicted position information or the predicted cell position sent by the position service network element, and uses the predicted position or predicted cell of the UE to perform network optimization.

It should be noted that determination of predicted position information may also be determined by a core network.

FIG. 2B is a schematic flowchart of another determination of predicted position information according to an embodiment of the present application. Referring to FIG. 2B, this example shows position prediction based on position prediction MDT measurement configuration. In this example, when determining the predicted position information, the base station sends MDT measurement configuration information, such as an RRC message, to the UE through the air interface, indicating a relevant UE to perform a relevant measurement. The RRC message may be an RRC establishment request message or an RRC reconfiguration message, or may be a new message, such as a position prediction request message, that is, a Position-prediction Request. The RRC message carries one or more of the following: MDT continuous measurement reporting indication; indication information of whether to record a MDT measurement in a connected state (RRC_CONNECTED); indication information of whether to record a MDT measurement connected in an INACTIVE state; indication information of whether to record a MDT measurement in idle state residency (RRC _IDLE); and MDT position prediction measurement configuration information.

According to one or more embodiments of the present application, Example 1 provides a measurement method for position prediction, including the following:

The base station sends the MDT measurement configuration information to the UE. and the MDT measurement configuration information is used to indicate that the UE performs a continuous MDT measurement collection in an idle state, an INACTIVE state or a connected state.

The base station receives the MDT measurement report sent by the UE, and the measurement report includes a measurement amount in one or more of the following states: an idle state; an inactive state; and a connected state.

According to one or more embodiments of the present disclosure, in Example 2, according to the method described in Example 1, the base station sends MDT measurement configuration information to the UE, including the following:

The base station sends a LoggedMDT measurement activation message to the UE through the air interface, and the LoggedMDT measurement activation message carries one or more of the following: MDT continuous measurement reporting indication; indication information of whether to record a MDT measurement in a connected state (RRC_CONNECTED); indication information of whether to record a MDT measurement connected in an INACTIVE state; indication information of whether to record a MDT measurement in idle state residency(RRC_IDLE); and MDT position prediction measurement configuration information;

Or, the base station sends the RRC message to the UE through the air interface, and the RRC message may be an RRC establishment request message or an RRC reconfiguration message, and the RRC message carries at least one of the following: MDT continuous measurement reporting indication information; indication information of whether to record a MDT measurement in a connected state (RRC_CONNECTED); indication information of whether to record a MDT measurement connected in an INACTIVE state; indication information of whether to record a MDT measurement in idle state residency (RRC _IDLE); and MDT position prediction measurement configuration information.

According to one or more embodiments of the present disclosure, Example 3 is according to the method of Example 1 or 2.

When the MDT position prediction measurement configuration information is configured, the MDT measurement activation information indicates the following contents: the MDT continuous measurement reporting indication is set to be positive, whether to record a MDT measurement in a connected state (RRC_CONNECTED) is set to be positive; whether to record a MDT measurement connected in an INACTIVE state is set to be positive; and whether to record a MDT measurement in an idle state residency (RRC_IDLE) is set to be positive.

According to one or more embodiments of the present disclosure, Example 4 is according to the method of any one of Example 1-3. The MDT position prediction measurement configuration information includes one or more of the following: the position measurement period; the effective time of position prediction measurement configuration; the indication information of whether to perform a measurement on a longitude and latitude coordinate; the indication information of whether to perform a measurement on altitude; the indication information of whether to perform a measure and a record on a connection cell identification; the indication information of whether to perform a measurement on speed; and the indication information of whether to perform measurement on a direction angle of the UE.

According to one or more embodiments of the present disclosure, Example 5 is according to the method of Example 1.

The measurement report includes a measurement amount of at least one of the following states: an idle state; an inactive state; and a connection state.

According to one or more embodiments of the present disclosure, Example 6 is according to the method of Example 1. The measurement report includes one or more the following continuous historical position measurement information of the UE in a continuous state: a longitude and latitude coordinate of one or more time points; a connection cell identification of one or more time points; a movement direction angle of the UE of one or more time points; and movement speed of the UE of one or more time points.

According to one or more embodiments of the present disclosure, Example 7 is according to the method of Example 1, further including the following:

The base station sends the MDT measurement report of the UE to the position service network element, and the position service network element calculates the current position of the UE and the position of the UE at a certain future time point or a future time period or predicts cell information according to the continuous historical position measurement information.

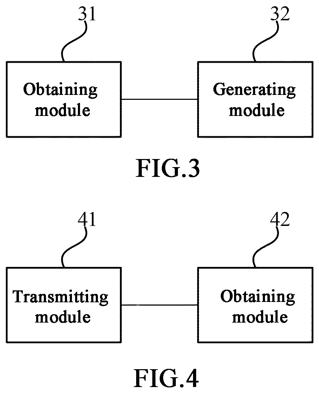

In an exemplary embodiment, the present application further provides a measurement apparatus. FIG.3 is a structural diagram of a measurement apparatus according to an embodiment of the present application. The device may be configured on a first communication node. As shown in FIG. 3, the apparatus includes an obtaining module 31 and a generating module 32. The obtaining module 31 is configured to obtain minimization of drive tests MDT measurement configuration information, and the MDT measurement configuration information indicates the first communication node to perform a continuous MDT measurement. The generating module 32 is configured to generate a measurement report according to the MDT measurement configuration information and transmitting the measurement report.

The measurement apparatus provided in this embodiment is used to implement the measurement method in the embodiment shown in FIG. 1. The implementation principle and technical effect of the measurement apparatus provided in this embodiment are similar to the measurement method in the embodiment shown in FIG. 1, and details are not repeated here.

On the basis of the above-mentioned embodiment, a modified embodiment of the above-mentioned embodiment is proposed. It should be noted here that, only difference from the above-mentioned embodiment is described in the modified embodiment for simplification.

In one embodiment, the MDT measurement configuration information is one of a radio resource control (RRC) message and record MDT measurement activation information. The RRC message is an RRC setup request message or an RRC reconfiguration message or a position prediction request message.

In one embodiment, the measurement report includes a measurement amount of one or more of the following states: an idle state; an inactive state; and a connected state.

In one embodiment, the measurement report includes continuous historical position measurement information of the first communication node in a continuous state, and the continuous historical position measurement information includes one or more of the following: a longitude and latitude coordinate of one or more time points; a connection cell identification of one or more time points; a movement direction angle of the first communication node of one or more time points; and movement speed of the first communication node of one or more time points.

In one embodiment, the MDT measurement configuration information includes one or more of the following: MDT measurement activation information; MDT continuous measurement reporting indication information; indication information of whether to record a MDT measurement in a connected state; indication information of whether to record a MDT measurement connected in an inactive state; indication information of whether to record a MDT measurement in the idle state residency; and MDT position prediction measurement configuration information.

In one embodiment, when the MDT measurement configuration information includes the MDT position prediction measurement configuration information, the MDT measurement activation information indicates the following contents: the MDT continuous measurement reporting indication is set to be positive, whether to record a MDT measurement in a connected state is set to be positive; whether to record a MDT measurement connected in an inactive state is set to be positive; and whether to record a MDT measurement in an idle state residency is set to be positive.

In one embodiment, the MDT position prediction measurement configuration information includes one or more of the following: a position measurement period; an effective time of position prediction measurement configuration; indication information of whether to perform a measurement on a longitude and latitude coordinate; indication information of whether to perform a measurement on altitude; indication information of whether to perform a measure and a record on a connection cell identification; indication information of whether to perform a measurement on speed; and indication information of whether to perform measurement on a movement direction angle of the first communication node.

In an exemplary embodiment, the present application further provides a measurement apparatus. FIG. 4 is a structural diagram of a measurement apparatus according to an embodiment of the present application. The apparatus may be configured on a second communication node. As shown in FIG. 4, the apparatus includes a transmission module 41 and the obtaining module 42.

The transmission module 41 is configured to transmit minimization of drive tests MDT measurement configuration information, and the MDT measurement configuration information indicates a first communication node to perform a continuous MDT measurement.

The obtaining module 42 is configured to obtain a measurement report transmitted on the first communication node, and the measurement report is used for network optimization.

The measurement apparatus provided in this embodiment is used to implement the measurement method in the embodiment shown in FIG. 2. The implementation principle and technical effect of the measurement apparatus provided in this embodiment are similar to the measurement method in the embodiment shown in FIG. 1, and details are not repeated here.

On the basis of the above-mentioned embodiment, a modified embodiment of the above-mentioned embodiment is proposed. It should be noted here that, only difference from the above-mentioned embodiment is described in the modified embodiment for simplification.

In one embodiment, the MDT measurement configuration information is one of a radio resource control (RRC) message and record MDT measurement activation information. The RRC message is an RRC setup request message or an RRC reconfiguration message or a position prediction request message.

In one embodiment, the measurement report includes a measurement amount of one or more of the following states: an idle state; an inactive state; and a connected state.

In one embodiment, the measurement report includes continuous historical position measurement information of the first communication node in a continuous state, and the continuous historical position measurement information includes one or more of the following: a longitude and latitude coordinate of one or more time points; a connection cell identification of one or more time points; a movement direction angle of the first communication node of one or more time points; and movement speed of the first communication node of one or more time points.

In one embodiment, the MDT measurement configuration information includes one or more of the following: MDT measurement activation information; MDT continuous measurement reporting indication information; indication information of whether to record a MDT measurement in a connected state; indication information of whether to record a MDT measurement connected in an inactive state; indication information of whether to record a MDT measurement in the idle state residency; and MDT position prediction measurement configuration information.

In one embodiment, when the MDT measurement configuration information includes the MDT position prediction measurement configuration information, and the MDT measurement activation information indicates the following contents: the MDT continuous measurement reporting indication is set to be positive, whether to record a MDT measurement in a connected state is set to be positive; whether to record a MDT measurement connected in an inactive state is set to be positive; and whether to record a MDT measurement in an idle state residency is set to be positive.

In one embodiment, the MDT position prediction measurement configuration information includes one or more of the following: a position measurement period; an effective time of position prediction measurement configuration; indication information of whether to perform a measurement on a longitude and latitude coordinate; indication information of whether to perform a measurement on altitude; indication information of whether to perform a measure and a record on a connection cell identification; indication information of whether to perform a measurement on speed; and indication information of whether to perform measurement on a movement direction angle of the first communication node.

In one embodiment, the apparatus further includes: a predicted position information obtaining module, configured to transmit the measurement report and obtain predicted position information. The predicted position information is information generated based on the measurement report, and the predicted position information is used for network optimization.

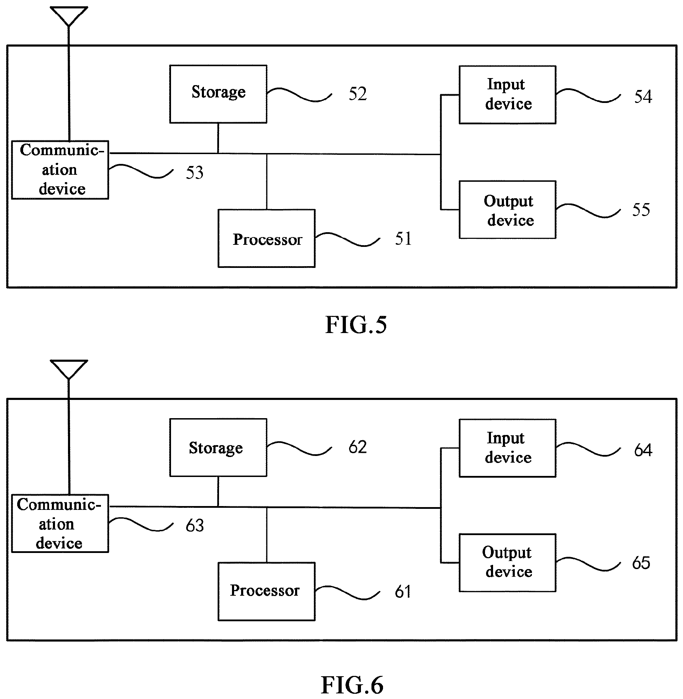

In an exemplary implementation, an embodiment of the present application further provides a first communication node. FIG. 5 is a structural diagram of a first communication node according to an embodiment of the present application. As shown in FIG. 5, the present application provides a first communication node including one or more processors 51 and a storage 52. The processors 51 in the first communication node may be one or more, and one processor 51 is taken as an example in FIG. 5. The storage 52 is used for storing one or more programs. The one or more programs are executed by the one or more processors 51 so that the one or more processors 51 implement the measurement method as described in FIG. 1 of the present application.

The first communication node further includes: a communication device 53, an input device 54 and an output device 55.

The processor 51, the storage 52, the communication device 53, the input device 54 and the output device 55 in the first communication node may be connected by a bus or in other ways, and the connection by a bus is taken as an example in FIG. 5.

The input device 54 may be used to receive input numerical or character information, and to generate key signal input related to user settings and function control of the first communication node. The output device 55 may include a display device such as a display screen.

The communication device 53 may include a receiver and a transmitter. The communication device 53 is configured to transmit and receive information according to control of the processor 51. The information includes, but is not limited to, MDT measurement configuration information and a measurement report.

As a computer-readable storage medium, the storage 52 can be configured as a store software program, a computer-executable program and a module, such as a program indication/module corresponding to the measurement method described in FIG. 1 of the present application (for example, the obtaining module 31 and the generation module 32in the measurement apparatus). The storage 52 may include a storage program area and a storage data area, and the storage program area may store an operating system, and an application program required by at least one function. The storage data area may store data created according to use of the first communication node, and the like. Additionally, the storage 52 may include high-speed random access memory, and may also include non-volatile memory, such as at least one magnetic disk storage, a flash memory device, or other non-volatile solid state storage. In some instances, the storage 52 may further include a memory located remotely from the processor 51, and the remote memory may be connected to the first communication node through a network. The above examples of such networks include, but are not limited to, the Internet, an intranet, a local area network, a mobile communication network, and combinations thereof.

In an exemplary implementation, an embodiment of the present application further provides a second communication node. FIG. 6 is a structural diagram of a second communication node according to an embodiment of the present application. As shown in FIG. 6, the present application provides a second communication node including one or more processors 61 and a storage 62. The processors 61 in the first communication node may be one or more, and one processor 61 is taken as an example in FIG. 6; the storage 62 is used for storing one or more programs. The one or more programs are executed by the one or more processors 61 so that the one or more processors 61 implement the measurement method as described in FIG. 2 of the present application.

The second communication node further includes: a communication device 63, an input device 64 and an output device 65.

The processor 61, the storage 62, the communication device 63, the input device 64 and the output device 65 in the second communication node may be connected by a bus or in other ways, and the connection by a bus is taken as an example in FIG. 6.

The input device 64 may be used to receive input numerical or character information, and to generate key signal input related to user settings and function control of the second communication node. The output device 65 may include a display device such as a display screen.

The communication device 63 may include a receiver and a transmitter. The communication device 63 is configured to transmit and receive information according to control of the processor 61. The information includes, but is not limited to, MDT measurement configuration information and a measurement report.

As a computer-readable storage medium, the storage 62 can be configured as a store software program, a computer-executable program and a module, such as a program indication/module corresponding to the measurement method described in FIG. 2 of the present application (for example, the obtaining module 41 and the generation module 42 in the measurement apparatus). The storage 62 may include a storage program area and a storage data area, and the storage program area may store an operating system and an application program required by at least one function. The storage data area may store data created according to use of the first communication node, and the like. Additionally, the storage 62 may include high-speed random access memory, and may also include non-volatile memory, such as at least one magnetic disk storage, a flash memory device, or other non-volatile solid state storage. In some instances, the storage 62 may further include a memory located remotely from the processor 61, and the remote memory may be connected to the first communication node through a network. The above examples of such networks include, but are not limited to, the Internet, an intranet, a local area network, a mobile communication network, and combinations thereof.

Embodiments of the present application further provide a storage medium, where a computer program is stored in the storage medium, and when the computer program is executed by a processor, any one of the methods described in the present application is implemented, and the storage medium stores a computer program, and when the computer program is executed by the processor, any one of the measurement methods described in the embodiments of the present application is implemented. For example, the measurement method applied to the first communication node and the measurement method applied to the second communication node. The measurement method applied to the first communication node includes: obtaining the minimum drive test MDT measurement configuration information, where the MDT measurement configuration information indicates the first communication node to perform a continuous MDT measurement; and generating and transmitting a measurement report according to the MDT measurement configuration information.

The measurement method applied to the second communication node includes: transmitting MDT measurement configuration information, where the MDT measurement configuration information indicates the first communication node to perform a continuous MDT measurement; and obtaining a measurement report transmitted by the first communication node, where the measurement report is used for network optimization.

The computer storage medium of the embodiments of the present application may adopt any combination of one or more computer-readable media. The computer-readable medium may be a computer-readable signal medium or a computer-readable storage medium. The computer readable storage medium may be, for example, but is not limited to, an electrical, magnetic, optical, electromagnetic, infrared, or semiconductor system, apparatus or mean, or any combination of the above. More specific examples (non-exhaustive list) of computer readable storage media include: electrical connections with one or more wires, portable computer disks, hard disks, random access memory (RAM), Read Only,Memory (ROM), Erasable Programmable Read Only Memory (EPROM), Flash Memory, Optical Fiber, Portable Compact Disc Read Only Memory (CD-ROM), Optical Memory devices, magnetic memory devices, or any suitable combination of the foregoing. A computer-readable storage medium can be any tangible medium that contains or stores a program that can be used by or in a combination with an instruction execution system, an apparatus, or a means.

A computer-readable signal medium may include a propagated data signal in baseband or as part of a carrier wave, with computer-readable program code embodied thereon. Such propagated data signals may take a variety of forms including, but not limited to, electromagnetic signals, optical signals, or any suitable combination of the foregoing. A computer-readable signal medium can also be any computer-readable medium other than a computer-readable storage medium that can transmit, propagate, or transport the program for use by or in a combination with an instruction execution system, an apparatus, or a mean.

A program code embodied on a computer-readable medium may be transmitted using any suitable medium, including but not limited to: wireless, wire, optical fiber cable, radio frequency (RF), etc., or any suitable combination of the foregoing.

A computer program code for carrying out the operations of the present application may be written in one or more programming languages, including object-oriented programming languages-such as Java, Smalltalk, C++, but also conventional A procedural programming language, such as the "C" language or similar programming language. The program code may execute entirely on the user's computer, partly on the user's computer, as a stand-alone software package, partly on the user's computer and partly on a remote computer, or entirely on the remote computer or server. In the case of a remote computer, the remote computer may be connected to the user's computer through any kind of network, including a Local Area Network (LAN) or Wide Area Network (WAN), or may be connected to an external computer (e.g., use an internet service provider to connect via the internet).

The above descriptions are merely exemplary embodiments of the present application, and are not intended to limit the protection scope of the present application.

As will be understood by those skilled in the art, the term of user equipment encompasses any suitable type of wireless user equipment, such as mobile telephones, portable data processing devices, portable web browsers or vehicle-mounted mobile stations.

In general, the various embodiments of the present application may be implemented in hardware or special purpose circuits, software, logic, or any combination thereof. For example, some aspects may be implemented in hardware, while other aspects may be implemented in firmware or software that may be executed by a controller, microprocessor or other computing devices, although the present application is not limited so.

Embodiments of the present application may be implemented by the execution of computer program instructions by a data processor of a mobile device, e.g., in a processor entity, or by hardware, or by a combination of software and hardware. Computer program instructions may be assembly Instructions, Instructions Set Architecture (ISA) indications, machine instructions, machine-dependent instructions, microcode, firmware instructions, state setting data, or written in any combination of one or more programming languages source or object code.

The block diagrams of any logic flow in the figures of the present application may represent program steps, or may represent interconnected logic circuits, modules and functions, or may represent a combination of program steps and logic circuits, modules and functions. Computer programs can be stored on memory. The memory may be of any type suitable for the local technical environment and may be implemented using any suitable data storage technology, such as, but not limited to, Read-Only Memory (ROM), Random Access Memory (RAM), optical Memory devices and systems (Digital Video Disc (DVD) or Compact Disk (CD)), etc. Computer-readable media may include non-transitory storage media. The data processor can be any type suitable for the local technical environment, such as but not limited to a general purpose computer, a special purpose computer, a microprocessor, a digital signal processor (Digital Signal Processing, DSP), an application specific integrated circuit (ASIC)), programmable logic devices (Field-Programmable Gate Array, FPGA) and processors based on multi-core processor architecture.

## Claims

1. A measurement method, applied to a user equipment, UE, comprising:
obtaining (S110) minimized drive tests, MDT, measurement configuration information, wherein the MDT measurement configuration information indicates the UE to perform a continuous MDT measurement during continuous multiple states among an idle state, an inactive state, and a connected state; and
generating (S120) a measurement report according to the MDT measurement configuration information, and transmitting the measurement report.

2. The method according to claim 1, wherein the MDT measurement configuration information is one of a radio resource control, RRC, message and record MDT measurement activation information; and
wherein, the RRC message is an RRC setup request message, or an RRC reconfiguration message, or a position prediction request message.

3. The method according to claim 1, wherein the measurement report comprises a measurement amount of at least one of the following states: an idle state; an inactive state; and a connection state;
and/or,
wherein the measurement report comprises continuous historical position measurement information of the UE in a continuous state, and
the continuous historical position measurement information comprises at least one of the following: a longitude and latitude coordinate at one or more time points; a connection cell identification at one or more time points; a movement direction angle of the UE at one or more time points; and movement speed of the UE at one or more time points.

4. The method according to claim 1, wherein the MDT measurement configuration information comprises at least one of the following:
MDT measurement activation information;
MDT continuous measurement reporting indication information;
indication information regarding whether to record a MDT measurement in a connected state;
indication information regarding whether to record a MDT measurement connected in an inactive state;
indication information regarding whether to record a MDT measurement in an idle state residency; and
MDT position prediction measurement configuration information.

5. The method according to claim 4, wherein, in case of the MDT measurement configuration information comprising the MDT position prediction measurement configuration information, MDT measurement activation information indicates the following contents:
the MDT continuous measurement reporting indication is set to be positive;
whether to record a MDT measurement in a connected state is set to be positive;
whether to record a MDT measurement connected in an inactive state is set to be positive;
and
whether to record a MDT measurement in an idle state residency is set to be positive;
and/or,
wherein the MDT position prediction measurement configuration information comprises one or more of the following:
a position measurement period;
an validity time of position prediction measurement configuration;
indication information regarding whether to perform measurement on a longitude and latitude coordinate;
indication information regarding whether to perform measurement on altitude;
indication information regarding whether to perform measurement and recording on a connection cell identification;
indication information regarding whether to perform measurement on speed; and
indication information regarding whether to perform measurement on a movement direction angle of the UE.

6. A measurement method, applied to a base station, comprising:
transmitting (S210) minimized drive test, MDT, measurement configuration information, wherein the MDT measurement configuration information indicates a user equipment, UE, to perform a continuous MDT measurement during continuous multiple states among an idle state, an inactive state, and a connected state; and
obtaining (S220) a measurement report transmitted by the UE, wherein the measurement report is used to perform network optimization.

7. The method according to claim 6, wherein the MDT measurement configuration information is one of a radio resource control, RRC, message and record MDT measurement activation information; and
wherein, the RRC message is an RRC setup request message, or an RRC reconfiguration message, or a position prediction request message; and the MDT measurement configuration information is transmitted after indication information of MDT prediction position measurement is obtained.

8. The method according to claim 6, wherein the measurement report comprises a measurement amount of at least one of the following states: an idle state; an inactive state; and a connection state;
and/or,
wherein the measurement report comprises continuous historical position measurement information of the UE in a continuous state, and the continuous historical position measurement information comprises at least one of the following: a longitude and latitude coordinate at one or more time points; a connection cell identification at one or more time points; a movement direction angle of the UE at one or more time points; and movement speed of the UE at one or more time points.

9. The method according to claim 6, wherein the MDT measurement configuration information comprises at least one of the following:
MDT measurement activation information;
MDT continuous measurement reporting indication information;
indication information regarding whether to record a MDT measurement in a connected state;
indication information regarding whether to record a MDT measurement connected in an inactive state;
indication information regarding whether to record a MDT measurement in an idle state residency; and
MDT position prediction measurement configuration information.

10. The method according to claim 9, wherein, in case of the MDT measurement configuration information comprising the MDT position prediction measurement configuration information, MDT measurement activation information indicates the following contents:
the MDT continuous measurement reporting indication is set to be positive;
whether to record a MDT measurement in a connected state is set to be positive;
whether to record a MDT measurement connected in an inactive state is set to be positive;
and
whether to record a MDT measurement in an idle state residency is set to be positive;
and/or,
wherein the MDT position prediction measurement configuration information comprises at least one of the following:
a position measurement period;
an validity time of position prediction measurement configuration;
indication information regarding whether to perform a longitude and latitude coordinate measurement;
indication information regarding whether to perform a height measurement;
indication information regarding whether to perform a measure and a record on a connection cell identification;
indication information regarding whether to perform speed measurement; and
indication information regarding whether to perform a measurement on a movement direction angle of the UE.

11. The method according to claim 6, further comprising:
transmitting the measurement report; and
obtaining predicted position information, wherein the predicted position information is information generated based on the measurement report, and the predicted position information is used for network optimization.

12. A measurement apparatus, arranged in a user equipment, UE, comprising:
an obtaining module (31), which is configured to obtain minimized drive tests, MDT, measurement configuration information, wherein the MDT measurement configuration information indicates the UE to perform a continuous MDT measurement during continuous multiple states among an idle state, an inactive state, and a connected state; and
a generating module (32), which is configured to generate a measurement report according to the MDT measurement configuration information and transmit the measurement report.

13. A measurement apparatus, arranged in a base station, comprising:
a transmission module (41), which is configured to transmit minimized drive tests, MDT, measurement configuration information, wherein the MDT measurement configuration information indicates a user equipment, UE, to perform a continuous MDT measurement during continuous multiple states among an idle state, an inactive state, and a connected state; and
an obtaining module (42), which is configured to obtain a measurement report transmitted by the UE, wherein the measurement report is used for network optimization.

14. A storage medium storing a computer program, when executed by a processor, the computer program implements the method according to any one of claims 1-11.

## Patentansprüche

1. Messverfahren, das auf ein Benutzergerät (UE) angewendet wird, aufweisend:
Erhalten (S110) von minimierten Fahrtest-Messkonfigurationsinformationen (MDT-Messkonfigurationsinformationen), wobei die MDT-Messkonfigurationsinformationen dem UE angeben, eine kontinuierliche MDT-Messung während kontinuierlicher mehrerer Zustände unter einem Leerlaufzustand, einem inaktiven Zustand und einem verbundenen Zustand durchzuführen; und
Erzeugen (S120) eines Messberichts gemäß den MDT-Messkonfigurationsinformationen und Übertragen des Messberichts.

2. Verfahren nach Anspruch 1, wobei die MDT-Messkonfigurationsinformationen eines von einer Funkressourcensteuerungsnachricht (RRC-Nachricht) und Aufzeichnungs-MDT-Messaktivierungsinformationen sind; und
wobei die RRC-Nachricht eine RRC-Einrichtungsanforderungsnachricht oder eine RRC-Rekonfigurationsnachricht oder eine Positionsvorhersage-Anforderungsnachricht ist.

3. Verfahren nach Anspruch 1, wobei der Messbericht eine Messmenge von mindestens einem der folgenden Zustände aufweist: einem Leerlaufzustand; einem inaktiven Zustand; und einem Verbindungszustand;
und/oder
wobei der Messbericht kontinuierliche historische Positionsmessinformationen des UE in einem kontinuierlichen Zustand aufweist, und
die kontinuierlichen historischen Positionsmessinformationen mindestens eines aufweisen von: einer Längen- und Breitengradkoordinate zu einem oder mehreren Zeitpunkten; einer Verbindungszellenidentifikation zu einem oder mehreren Zeitpunkten; einem Bewegungsrichtungswinkel des UE zu einem oder mehreren Zeitpunkten; und Bewegungsgeschwindigkeit des UE zu einem oder mehreren Zeitpunkten.

4. Verfahren nach Anspruch 1, wobei die MDT-Messkonfigurationsinformationen mindestens eines aufweisen von:
MDT-Messungsaktivierungsinformationen;
MDT-Dauermessungs-Berichtsangabeninformationen;
Angabeinformationen bezüglich dessen, ob eine MDT-Messung in einem verbundenen Zustand aufzuzeichnen ist;
Angabeinformationen bezüglich dessen, ob eine MDT-Messung aufzuzeichnen ist, die in einem inaktiven Zustand verbunden ist;
Angabeinformationen bezüglich dessen, ob eine MDT-Messung in einer Leerlaufzustand-Verweilzeit aufzuzeichnen ist; und
MDT-Positionsvorhersage-Messkonfigurationsinformationen.

5. Verfahren nach Anspruch 4, wobei, falls die MDT-Messkonfigurationsinformationen die MDT-Positionsvorhersage-Messkonfigurationsinformationen aufweisen, MDT-Messaktivierungsinformationen die folgenden Inhalte angeben:
die MDT-Dauermessungs-Berichtsangabe ist auf positiv gesetzt;
ob eine MDT-Messung in einem verbundenen Zustand aufzuzeichnen ist, ist auf positiv gesetzt;
ob eine in einem inaktiven Zustand verbundene MDT-Messung aufzuzeichnen ist, ist auf positiv gesetzt; und
ob eine MDT-Messung in einer Leerlaufzustandsverweilzeit aufzuzeichnen ist, ist auf positiv gesetzt;
und/oder
wobei die MDT-Positionsvorhersage-Messkonfigurationsinformationen eines oder mehreres aufweist von:
einem Positionsmesszeitraum;
einer Gültigkeitsdauer einer Positionsvorhersage-Messkonfiguration;
Angabeinformationen bezüglich dessen, ob eine Messung an einer Längenund Breitengradkoordinate durchzuführen ist;
Angabeinformationen bezüglich dessen, ob eine Messung der Höhe durchzuführen ist;
Angabeinformationen bezüglich dessen, ob eine Messung und Aufzeichnung an einer Verbindungszellenidentifikation durchzuführen ist;
Angabeinformationen bezüglich dessen, ob eine Messung der Geschwindigkeit durchzuführen ist; und
Angabeinformationen bezüglich dessen, ob eine Messung an einem Bewegungsrichtungswinkel des UE durchzuführen ist.

6. Messverfahren, das auf eine Basisstation angewendet wird, aufweisend:
Übertragen (S210) von minimierten Fahrtest-Messkonfigurationsinformationen (MDT-Messkonfigurationsinformationen), wobei die MDT-Messkonfigurationsinformationen einem Benutzergerät (UE) angeben, eine kontinuierliche MDT-Messung während kontinuierlicher mehrerer Zustände unter einem Leerlaufzustand, einem inaktiven Zustand und einem verbundenen Zustand durchzuführen; und
Erhalten (S220) eines Messberichts, der von dem UE übertragen wird, wobei der Messbericht verwendet wird, um eine Netzwerkoptimierung durchzuführen.

7. Verfahren nach Anspruch 6, wobei die MDT-Messkonfigurationsinformationen eines von einer Funkressourcensteuerungsnachricht (RRC-Nachricht) und Aufzeichnungs-MDT-Messaktivierungsinformationen sind; und
wobei die RRC-Nachricht eine RRC-Einrichtungsanforderungsnachricht oder eine RRC-Rekonfigurationsnachricht oder eine Positionsvorhersage-Anforderungsnachricht ist; und die MDT-Messkonfigurationsinformationen übertragen werden, nachdem Indikationsinformationen der MDT-Vorhersagepositionsmessung erhalten wurden.

8. Verfahren nach Anspruch 6, wobei der Messbericht eine Messmenge von mindestens einem der folgenden Zustände aufweist: einem Leerlaufzustand; einem inaktiven Zustand; und einem Verbindungszustand;
und/oder
wobei der Messbericht kontinuierliche historische Positionsmessungsinformationen des UE in einem kontinuierlichen Zustand aufweist, und die kontinuierlichen historischen Positionsmessungsinformationen mindestens eines aufweisen von: einer Längen- und Breitengradkoordinate zu einem oder mehreren Zeitpunkten; einer Verbindungszellenidentifikation zu einem oder mehreren Zeitpunkten; einem Bewegungsrichtungswinkel des UE zu einem oder mehreren Zeitpunkten; und Bewegungsgeschwindigkeit des UE zu einem oder mehreren Zeitpunkten.

9. Verfahren nach Anspruch 6, wobei die MDT-Messkonfigurationsinformationen mindestens eines der folgenden aufweisen:
MDT-Messungsaktivierungsinformationen;
MDT-Dauermessungs-Berichtsangabeinformationen;
Angabeinformationen bezüglich dessen, ob eine MDT-Messung in einem verbundenen Zustand aufzuzeichnen ist;
Angabeinformationen bezüglich dessen, ob eine MDT-Messung aufzuzeichnen ist, die in einem inaktiven Zustand verbunden ist;
Angabeinformationen bezüglich dessen, ob eine MDT-Messung in einer Leerlaufzustand-Verweilzeit aufzuzeichnen ist; und
MDT-Positionsvorhersage-Messkonfigurationsinformationen.

10. Verfahren nach Anspruch 9, wobei, falls die MDT-Messkonfigurationsinformationen die MDT-Positionsvorhersage-Messkonfigurationsinformationen aufweisen, MDT-Messaktivierungsinformationen die folgenden Inhalte anzeigen:
die MDT-Dauermessungs-Berichtsangabe ist auf positiv gesetzt;
ob eine MDT-Messung in einem verbundenen Zustand aufzuzeichnen ist, ist auf positiv gesetzt;
ob eine in einem inaktiven Zustand verbundene MDT-Messung aufzuzeichnen ist, ist auf positiv gesetzt; und
ob eine MDT-Messung in einer Leerlaufzustandsverweilzeit aufzuzeichnen ist, ist auf positiv gesetzt;
und/oder
wobei die MDT-Positionsvorhersage-Messkonfigurationsinformationen mindestens eines aufweisen von:
einem Positionsmesszeitraum;
einer Gültigkeitsdauer einer Positionsvorhersage-Messkonfiguration;
Angabeinformationen bezüglich dessen, ob eine Längen- und Breitengradkoordinatenmessung durchzuführen ist;
Angabeinformationen bezüglich dessen, ob eine Höhenmessung durchzuführen ist;
Angabeinformationen bezüglich dessen, ob eine Messung und Aufzeichnung an einer Verbindungszellenidentifikation durchzuführen ist;
Angabeinformationen bezüglich dessen, ob eine Geschwindigkeitsmessung durchzuführen ist; und
Angabeinformationen bezüglich dessen, ob eine Messung an einem Bewegungsrichtungswinkel des UE durchzuführen ist.

11. Verfahren nach Anspruch 6, ferner aufweisend:
Übertragen des Messberichts; und
Erhalten von vorhergesagten Positionsinformationen, wobei die vorhergesagten Positionsinformationen Informationen sind, die basierend auf dem Messbericht erzeugt werden, und die vorhergesagten Positionsinformationen für die Netzwerkoptimierung verwendet werden.

12. Messeinrichtung, die in einem Benutzergerät (UE) angeordnet ist, aufweisend:
ein Erhaltungsmodul (31), das zum Erhalten von minimierten Fahrtest-Messkonfigurationsinformationen (MDT-Messkonfigurationsinformationen) konfiguriert ist, wobei die MDT-Messkonfigurationsinformationen dem UE anzeigen, eine kontinuierliche MDT-Messung während kontinuierlicher mehrerer Zustände unter einem Leerlaufzustand, einem inaktiven Zustand und einem verbundenen Zustand durchzuführen; und
ein Erzeugungsmodul (32), das konfiguriert ist, um einen Messbericht gemäß den MDT-Messkonfigurationsinformationen zu erzeugen und den Messbericht zu übertragen.

13. Messeinrichtung, die in einer Basisstation angeordnet ist, aufweisend:
ein Übertragungsmodul (41), das zum Übertragen von minimierten Fahrtest-Messkonfigurationsinformationen (MDT-Messkonfigurationsinformationen) konfiguriert ist, wobei die MDT-Messkonfigurationsinformationen einem Benutzergerät (UE) angeben, eine kontinuierliche MDT-Messung während kontinuierlicher mehrerer Zustände unter einem Leerlaufzustand, einem inaktiven Zustand und einem verbundenen Zustand durchzuführen; und
ein Erhaltungsmodul (42), das dazu konfiguriert ist, einen von dem UE übertragenen Messbericht zu erhalten, wobei der Messbericht für die Netzwerkoptimierung verwendet wird.

14. Speichermedium, das ein Computerprogramm speichert, wobei das Computerprogramm, wenn es von einem Prozessor ausgeführt wird, das Verfahren nach einem der Ansprüche 1 bis 11 implementiert.

## Revendications

1. Procédé de mesure, appliqué à un équipement utilisateur, UE, comprenant :
l'obtention (S110) d'informations de configuration de mesure de tests de conduite minimisés, MDT, dans lequel les informations de configuration de mesure MDT indiquent à l'UE d'effectuer une mesure MDT continue pendant de multiples états continus parmi un état de repos, un état inactif et un état connecté ; et
la génération (S120) d'un rapport de mesure selon les informations de configuration de mesure MDT, et la transmission du rapport de mesure.

2. Procédé selon la revendication 1, dans lequel les informations de configuration de mesure MDT sont l'un parmi un message de commande de ressources radio, RRC, et un enregistrement d'informations d'activation de mesure MDT ; et
dans lequel le message RRC est un message de demande d'installation RRC, ou un message de reconfiguration RRC, ou un message de demande de prédiction de position.

3. Procédé selon la revendication 1, dans lequel le rapport de mesure comprend une quantité de mesure d'au moins l'un parmi les états suivants : un état de repos ; un état inactif ; et un état de connexion ;
et/ou,
dans lequel le rapport de mesure comprend des informations de mesure de position historique continue de l'UE dans un état continu, et
les informations de mesure de position historique continues comprennent au moins l'un parmi les éléments suivants : des coordonnées de longitude et de latitude à un ou plusieurs points temporels ; une identification de cellule de connexion à un ou plusieurs points temporels ; un angle de direction de mouvement de l'UE à un ou plusieurs points temporels ; et une vitesse de déplacement de l'UE à un ou plusieurs points temporels.

4. Procédé selon la revendication 1, dans lequel les informations de configuration de mesure MDT comprennent au moins l'un parmi les éléments suivants :
des informations d'activation de mesure MDT ;
des informations d'indication de rapport de mesure continue MDT ;
des informations d'indication concernant l'enregistrement ou non d'une mesure MDT dans un état connecté ;
des informations d'indication concernant l'enregistrement ou non d'une mesure MDT connectée dans un état inactif ;
des informations d'indication concernant l'enregistrement ou non d'une mesure MDT dans une résidence à l'état de repos ; et
des informations de configuration de mesure de prédiction de position MDT.

5. Procédé selon la revendication 4, dans lequel, dans un cas des informations de configuration de mesure MDT comprenant les informations de configuration de mesure de prédiction de position MDT, des informations d'activation de mesure MDT indiquent le contenu suivant :
l'indication de rapport de mesure continue MDT est définie comme positive ;
le fait de savoir s'il faut enregistrer une mesure MDT dans un état connecté est défini comme positif ;
le fait de savoir s'il faut enregistrer une mesure MDT connectée dans un état inactif est défini comme positif ; et
le fait de savoir s'il faut enregistrer une mesure MDT dans une résidence à l'état de repos est défini comme positif ;
et/ou,
dans lequel les informations de configuration de mesure de prédiction de position MDT comprennent un ou plusieurs des éléments suivants :
une période de mesure de position ;
une durée de validité de configuration de mesure de prédiction de position ;
des informations d'indication concernant le fait d'effectuer une mesure sur une coordonnée de longitude et de latitude ;
des informations d'indication concernant le fait d'effectuer une mesure sur une altitude ;
des informations d'indication concernant le fait d'effectuer une mesure et un enregistrement sur une identification de cellule de connexion ;
des informations d'indication concernant le fait d'effectuer une mesure sur une vitesse ; et
des informations d'indication concernant le fait d'effectuer une mesure sur un angle de direction de déplacement de l'UE.

6. Procédé de mesure, appliqué à une station de base, comprenant :
la transmission (S210) d'informations de configuration de mesure de tests de conduite minimisée, MDT, dans lequel les informations de configuration de mesure MDT indiquent un équipement utilisateur, UE, pour effectuer une mesure MDT continue pendant de multiples états continus parmi un état de repos, un état inactif et un état connecté ; et
l'obtention (S220) d'un rapport de mesure transmis par l'UE, dans lequel le rapport de mesure est utilisé pour effectuer une optimisation de réseau.

7. Procédé selon la revendication 6, dans lequel les informations de configuration de mesure MDT sont l'un parmi un message de commande de ressources radio, RRC, et un enregistrement d'informations d'activation de mesure MDT ; et
dans lequel le message RRC est un message de demande d'installation RRC, ou un message de reconfiguration RRC, ou un message de demande de prédiction de position ; et les informations de configuration de mesure MDT sont transmises après l'obtention des informations d'indication de mesure de position de prédiction MDT.

8. Procédé selon la revendication 6, dans lequel le rapport de mesure comprend une quantité de mesure de l'au moins un parmi les états suivants : un état de repos ; un état inactif ; et un état de connexion ;
et/ou,
dans lequel le rapport de mesure comprend des informations de mesure de position historique continue de l'UE dans un état continu, et les informations de mesure de position historique continue comprennent au moins l'un des éléments suivants : une coordonnée de longitude et de latitude à un ou plusieurs points temporels ; une identification de cellule de connexion à un ou plusieurs points temporels ; un angle de direction de mouvement de l'UE à un ou plusieurs points temporels ; et une vitesse de déplacement de l'UE à un ou plusieurs points temporels.

9. Procédé selon la revendication 6, dans lequel les informations de configuration de mesure MDT comprennent au moins l'un parmi les éléments suivants :
des informations d'activation de mesure MDT ;
des informations d'indication de rapport de mesure continue MDT ;
des informations d'indication concernant l'enregistrement ou non d'une mesure MDT dans un état connecté ;
des informations d'indication concernant l'enregistrement ou non d'une mesure MDT connectée dans un état inactif ;
des informations d'indication concernant l'enregistrement ou non d'une mesure MDT dans une résidence à l'état de repos ; et
des informations de configuration de mesure de prédiction de position MDT.

10. Procédé selon la revendication 9, dans lequel, dans un cas où les informations de configuration de mesure MDT comprenant les informations de configuration de mesure de prédiction de position MDT, des informations d'activation de mesure MDT indiquent le contenu suivant :
l'indication de rapport de mesure continue MDT est définie comme positive ;
le fait de savoir s'il faut enregistrer une mesure MDT dans un état connecté est défini comme positif ;
le fait de savoir s'il faut enregistrer une mesure MDT connectée dans un état inactif est défini comme positif ; et
le fait de savoir s'il faut enregistrer une mesure MDT dans une résidence à l'état de repos est défini comme positif ;
et/ou,
dans lequel les informations de configuration de mesure de prédiction de position MDT comprennent au moins l'un des éléments suivants :
une période de mesure de position ;
une durée de validité de configuration de mesure de prédiction de position ;
des informations d'indication concernant le fait d'effectuer une mesure de coordonnée de longitude et de latitude ;
des informations d'indication concernant le fait d'effectuer une mesure de hauteur ;
des informations d'indication concernant le fait d'effectuer une mesure et un enregistrement sur une identification de cellule de connexion ;
des informations d'indication concernant le fait d'effectuer une mesure de vitesse ; et
des informations d'indication concernant le fait d'effectuer une mesure sur un angle de direction de mouvement de l'UE.

11. Procédé selon la revendication 6, comprenant en outre :
la transmission du rapport de mesure ; et
l'obtention d'informations de position prédite, dans lequel les informations de position prédites sont des informations générées sur la base du rapport de mesure, et les informations de position prédites sont utilisées pour une optimisation de réseau.

12. Appareil de mesure, agencé dans un équipement utilisateur, UE, comprenant :
un module d'obtention (31), configuré pour obtenir des informations de configuration de mesure de tests de conduite minimisée, MDT, dans lequel les informations de configuration de mesure MDT indiquent à l'UE d'effectuer une mesure MDT continue pendant de multiples états continus parmi un état de repos, un état inactif et un état connecté ; et
un module de génération (32), qui est configuré pour générer un rapport de mesure selon les informations de configuration de mesure MDT et transmettre le rapport de mesure.

13. Appareil de mesure, agencé dans une station de base, comprenant :
un module de transmission (41), qui est configuré pour transmettre des informations de configuration de mesure de tests de conduite minimisée, MDT, dans lequel les informations de configuration de mesure MDT indiquent un équipement utilisateur, UE, pour effectuer une mesure MDT continue pendant de multiples états continus parmi un état de repos, un état inactif et un état connecté ; et
un module d'obtention (42), qui est configuré pour obtenir un rapport de mesure transmis par l'UE, dans lequel le rapport de mesure est utilisé pour une optimisation de réseau.

14. Support de stockage stockant un programme informatique, lorsqu'il est exécuté par un processeur, le programme informatique met en œuvre le procédé selon l'une quelconque des revendications 1 à 11.
